# FASCICULE DE BREVET EUROPEEN

(11) **EP 1 440 629 B1**
(45) Date de publication et mention de la délivrance du brevet: **22.08.2007**
(21) Numéro de dépôt: 04290166.0
(22) Date de dépôt: 22.01.2004
(51) Int. Cl.: A45D 34/04

(54) **Applicateur pour d'appliquer un produit sur une partie du corps humain**
Applikator zum Auftragen einer Substanz auf einen Teil des menschlichen Körpers
Applicator for applying a substance on a part of the human body

(30) Priorité: 23.01.2003 FR 0300722
(43) Date de publication de la demande: 28.07.2004
(73) Titulaire: L'ORÉAL, 75008 Paris (FR)
(72) Inventeur: Gueret, Jean-Louis, 75016 Paris (FR)
(74) Mandataire: Tanty, François

(56) Documents cités:
- FR-A- 2 010 051
- FR-A- 2 038 293
- FR-A- 2 796 532
- FR-A- 2 814 923

## Description

La présente invention concerne les applicateurs comportant un élément d'application permettant d'appliquer un produit, notamment un produit fluide, cosmétique et/ou de soin.

Par « produit cosmétique », on entend au sens de la présente invention un produit tel que défini dans la Directive 93/35/CEE du 14 juin 1993 modifiant la Directive 76/768/CEE.

On connaît de nombreux applicateurs dits capillaires, notamment par FR 2 730 704 ou EP 1 195 103 A1.

FR 2 730 704 décrit un applicateur pourvu d'au moins une fente à l'extrémité d'une tige. Un tel applicateur ne présente pas une autonomie très importante. FR 2 730 704 décrit également un applicateur ayant une autonomie plus grande, comportant un espace cylindrique annulaire communiquant avec une fente présente à l'extrémité de la tige. Un tel applicateur ne convient pas à certaines utilisations dans lesquelles il est souhaitable pour des questions d'ergonomie ou en raison de la nature de la région à traiter que la fente soit disposée autrement.

L'invention vise à proposer un nouvel applicateur dans lequel du produit est retenu par capillarité, qui puisse se charger aisément en produit et qui puisse être décliné sous diverses formes convenant à des applications sur des régions aussi diverses que les cils, la peau, les lèvres ou les ongles.

L'invention a ainsi pour objet un applicateur configuré pour appliquer du produit sur une partie du corps humain, notamment la peau, les lèvres ou les phanères, l'applicateur comportant un élément d'application, cet applicateur pouvant se caractériser par le fait que l'élément d'application comporte :
- au moins deux parois formant entre elles une cavité apte à retenir du produit,
- au moins une fente s'étendant selon un axe longitudinal et par laquelle du produit contenu dans la cavité peut être distribué pour être appliqué,
- au moins une ouverture par laquelle la cavité débouche à l'extérieur, cette ouverture présentant au moins une portion ayant, dans un plan transversal à la fente, une largeur supérieure à celle de la fente dans ce même plan.

Grâce à l'ouverture plus large que la fente, le chargement de la cavité en produit peut s'effectuer, le cas échéant, par cette ouverture d'une manière relativement aisée. L'applicateur peut présenter en outre une autonomie relativement importante grâce à la réserve de produit capable d'être retenue dans la cavité.

La forme des parois peut facilement être modifiée sans gêner la réalisation de la fente ou de l'ouverture, ce qui permet de décliner l'applicateur sous de multiples variantes adaptées au traitement de régions spécifiques du corps ou du visage.

De préférence, la fente est entièrement séparée de l'ouverture et située sensiblement à l'opposé de celle-ci.

L'applicateur peut être réalisé de façon à permettre de délivrer le produit sous la forme d'un film homogène d'une épaisseur sensiblement constante, avec mouillage instantané de la surface traitée, voire une saturation instantanée de cette surface lorsque l'application s'effectue sur des fibres kératiniques.

L'applicateur peut également permettre d'appliquer le produit sans soumettre celui-ci à de fortes contraintes mécaniques susceptibles d'entraîner par exemple une modification de sa rhéologie, notamment de sa consistance. Cela peut permettre d'appliquer des produits pour lesquels les applicateurs conventionnels tels que les pinceaux ou les brosses ne sont pas entièrement satisfaisants.

La largeur de la fente et la forme de celle-ci peuvent être choisies en fonction de la nature du produit et du débit souhaité lors de l'application.

L'applicateur selon l'invention peut permettre d'appliquer un produit quelque soit la position relative de l'applicateur par rapport à la surface sur laquelle le produit doit être appliqué, le produit étant retenu dans la fente par capillarité.

L'applicateur peut être agencé pour appliquer un produit cosmétique et/ou de soin, notamment de maquillage, sur la peau ou sur des surfaces kératiniques telles que les ongles, les cheveux, les cils ou les sourcils.

De préférence, la fente est située entre les deux parois, lesquelles peuvent présenter une forme allongée avec un axe longitudinal sensiblement parallèle à celui de la fente.

Les parois peuvent définir, en section transversale, une forme par exemple sensiblement en V, C, U ou W, avec au moins une fente débouchant dans le fond d'une concavité du V, C, U ou W, respectivement.

Lorsque les parois présentent, en section transversale, une forme générale en U, la fente peut être formée entre deux nervures sensiblement parallèles se raccordant à la base du U. Ces nervures peuvent être saillantes ou rentrantes.

Dans un exemple de mise en oeuvre de l'invention, l'élément d'application comporte une seule fente. En variante, l'élément d'application comporte au moins deux fentes, lesquelles peuvent être sensiblement parallèles. Lorsque l'élément d'application présente en section transversale une forme en W, les deux fentes peuvent déboucher dans le fond des deux concavités du W. Lorsque les deux parois définissent en section transversale une forme en U ou en V, les deux fentes peuvent déboucher de part et d'autre du fond de la concavité du U ou du V.

Lorsque la section transversale est en V, chaque branche du V peut être rectiligne ou présenter une concavité dirigée vers l'extérieur.

La fente peut être sensiblement rectiligne ou, en variante, courbe. La fente peut notamment décrire une portion de cercle ou d'ellipse. Ainsi, la fente peut présenter une forme adaptée à la surface sur laquelle le produit doit être appliqué, étant par exemple concave de façon à épouser la surface bombée d'un ongle. La fente peut en variante être convexe ou s'étendre selon une courbe ondulée.

La fente, respectivement l'ouverture, peut présenter une largeur sensiblement constante sur toute sa longueur ou, en variante, présenter une largeur non constante sur toute sa longueur du fait notamment de variations dans l'écartement des parois.

La fente peut présenter des bords linéiformes ou, en variante, des bords dentelés, notamment pour l'application de produit sur les cils ou les sourcils. Ces bords dentelés peuvent définir deux rangées de dents, notamment deux rangées parallèles. Les dents respectives des rangées peuvent être en regard les unes des autres ou être disposées en quinconce, afin d'agripper davantage les cils.

Dans le cas notamment où les bords de la fente comportent des dents, le produit peut être appliqué sur les cils sans contact réel direct d'un cil avec l'élément d'application, le contact du cil ayant lieu avec le produit seulement. Cela peut faciliter le gainage du cil avec le produit et conférer une sensation de douceur lors de l'application.

Dans un exemple de mise en oeuvre de l'invention, la fente, respectivement l'ouverture, est ininterrompue sur toute sa longueur. En variante, la fente, respectivement l'ouverture, est interrompue notamment par la présence d'au moins un pont de matière reliant les deux parois. Le terme « fente » englobe donc, au sens de la présente invention, une succession d'orifices disposés le long d'un axe.

Lorsque l'applicateur comporte une tige reliant l'élément d'application à un élément de préhension, la fente peut s'étendre sensiblement parallèlement à la direction longitudinale de la tige. En variante, la fente ne s'étend pas parallèlement à la direction longitudinale de la tige, étant par exemple perpendiculaire à cette direction.

L'élément d'application peut être au moins partiellement floqué, ce qui peut permettre par exemple de retenir davantage de produit, notamment si celui-ci est peu visqueux.

L'ouverture peut comporter au moins un bord au moins partiellement floqué, notamment deux bords sensiblement floqués, lesquels peuvent être parallèles, le cas échéant.

Les parois peuvent être élastiquement déformables ou être réalisées dans un matériau rigide. L'élément d'application peut être réalisé dans au moins l'un des matériaux suivants : matière thermoplastique ou thermodurcissable, élastomère, verre, bois ou métal.

L'applicateur peut comporter un organe de préhension.

L'invention a encore pour objet, selon un autre de ses aspects, un dispositif de conditionnement et d'application d'un produit, notamment cosmétique et/ou de soin, comportant :
- un récipient contenant un produit destiné à être appliqué,
- un applicateur tel que défini plus haut.

Dans un exemple de mise en oeuvre de l'invention, l'applicateur peut être fixé de manière amovible sur le récipient et être agencé pour pouvoir fermer le récipient de manière étanche.

Le dispositif peut comporter un essoreur, celui-ci pouvant comporter un bloc de mousse. D'autres types d'essoreurs peuvent encore être utilisés sans que l'on sorte du cadre de la présente invention, par exemple un essoreur à lèvres, floqué ou non.

Les parois de l'élément d'application permettent de préserver de l'essorage le produit présent dans la cavité lors du passage de l'élément d'application à travers l'essoreur.

En variante, l'applicateur peut être fixé à demeure sur le récipient et comporter un canal permettant au produit contenu dans le récipient de s'écouler dans la cavité de l'élément d'application.

L'invention a encore pour objet, selon un autre de ses aspects, l'utilisation d'un applicateur tel que défini plus haut pour appliquer un produit sur une région du corps ou du visage.

Lors de cette utilisation, l'élément d'application est chargé en produit, puis le produit est appliqué sur ladite région.

Le chargement en produit peut s'effectuer par exemple en engageant l'applicateur dans un récipient contenant le produit. L'applicateur est dans ce cas avantageusement essoré lors de son retrait du récipient.

En variante, l'élément d'application peut être chargé en produit grâce à un canal faisant communiquer la cavité de l'élément d'application avec un réservoir contenant le produit.

L'invention a encore pour objet, selon un autre de ses aspects, un procédé de traitement cosmétique comportant les étapes suivantes :
- fournir un applicateur comportant :
   - au moins deux parois formant entre elles une cavité apte à retenir du produit cosmétique,
   - au moins une fente s'étendant selon un axe longitudinal et par laquelle du produit contenu dans la cavité est distribué pour être appliqué,
   - au moins une ouverture autre que la fente par laquelle la cavité débouche à l'extérieur, cette cavité ayant, dans un plan transversal à la fente, une largeur supérieure à celle de la fente dans ce même plan,
- charger la cavité en produit cosmétique,
- appliquer le produit cosmétique sur une partie du corps humain soit par la fente, soit par l'ouverture.

Avantageusement, l'ouverture comporte au moins un bord au moins partiellement floqué, notamment deux bords opposés floqués.

La présente invention pourra être mieux comprise à la lecture de la description détaillée qui va suivre, d'exemples de mise en oeuvre non limitatifs de celle-ci, et à l'examen du dessin annexé, sur lequel :
- la figure 1 représente schématiquement et partiellement, en perspective, un applicateur conforme à un exemple de mise en oeuvre de l'invention,
- la figure 2 est une vue schématique et partielle, en coupe transversale suivant II-II, de l'applicateur de la figure 1,
- la figure 3 est une vue analogue à la figure 2, lors d'une application,
- les figures 4 à 12 représentent schématiquement et partiellement, en coupe transversale, des variantes d'éléments d'application,
- les figures 13 à 19 représentent schématiquement et partiellement, en perspective, des applicateurs conformes à d'autres exemples de mise en oeuvre de l'invention,
- les figures 20 à 23 représentent schématiquement et partiellement, en coupe axiale, d'autres dispositifs d'application conformes à l'invention,
- les figures 24 à 26 représentent schématiquement et partiellement, en perspective, d'autres applicateurs encore, et
- les figures 27 et 28 représentent, schématiquement et partiellement, en coupe transversale, d'autres variantes d'éléments d'application.

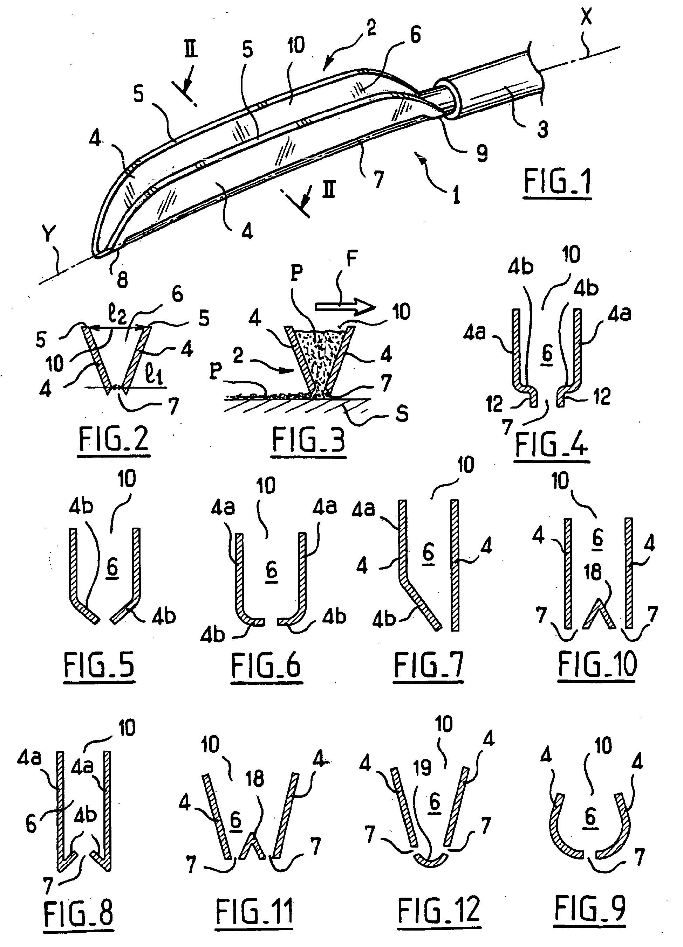

On a représenté sur la figure 1 un applicateur 1 comportant un élément d'application 2 relié à une extrémité à une tige 3 d'axe longitudinal X.

L'élément d'application 2 comprend deux parois 4 de forme allongée, ayant deux faces en regard non parallèles entre elles. Ces parois s'étendent, dans l'exemple considéré, sensiblement parallèlement à l'axe X et définissent, en section transversale, une forme sensiblement en V, comme on peut le voir sur la figure 2. Les bords supérieurs 5 des parois 4 se rejoignent aux extrémités longitudinales de l'élément d'application 2.

Les parois 4 ménagent entre elles une cavité 6 apte à retenir du produit P, notamment par capillarité.

L'élément d'application 2 comporte au fond du V une fente 7 s'étendant pratiquement sur toute la longueur des parois 4 et servant à distribuer le produit contenu dans la cavité 6.

Cette fente 7 présente une largeur suffisamment faible pour retenir par capillarité le produit contenu dans la cavité 6 et l'empêcher de s'écouler vers l'extérieur sous l'effet de la gravité.

La fente 7 permet de distribuer le produit sur une surface à traiter par capillarité lorsque l'élément d'application est suffisamment proche de cette surface pour que le produit retenu par la fente puisse mouiller celle-ci.

La fente 7 est fermée à ses extrémités longitudinales respectivement par deux ponts de matière 8 et 9 reliant les parois 4.

L'élément d'application 2 comporte, du côté opposé à la fente 7, une ouverture 10 permettant de charger la cavité 6 en produit. Cette ouverture 10 s'étend sensiblement sur toute la longueur des parois 8.

Comme on peut le voir sur la figure 2, cette ouverture 10 présente au moins dans la région centrale de l'élément d'application une largeur l₂ supérieure à celle l₁ de la fente 7, les largeurs l₁ et l₂ étant mesurées dans un plan perpendiculaire à l'axe longitudinal Y de la fente 7. On voit également que dans le plan de coupe de la figure 2, l'élément d'application s'étend entièrement d'un côté seulement de l'ouverture 10. On peut avoir par exemple l₂ ≥ 1,5 l₁, voire l₂ ≥ 3 l₁, avec l₁ voisin par exemple de 0,75 mm et l₂ voisin par exemple de 2 mm.

Dans l'exemple décrit, les parois 4 sont réalisées dans un matériau élastiquement déformable, par exemple un élastomère, mais elles pourraient encore être réalisées dans un matériau relativement rigide, par exemple.

Pour appliquer du produit sur une surface S, par exemple sur la peau comme illustré sur la figure 3, l'utilisateur amène la fente 7 de l'élément d'application 2 à proximité, voire au contact, de la surface S, de sorte que le produit P présent entre les bords de la fente 7 puisse mouiller la surface S et se déposer sur cette dernière.

Le déplacement de l'élément d'application 2 dans une direction transversale à l'axe X, c'est-à-dire suivant la flèche F de la figure 3, peut permettre de déposer sur la surface traitée S un film de produit P ayant une épaisseur sensiblement constante.

Le dépôt du produit P peut s'effectuer éventuellement sans contact de l'élément d'application 2 avec la surface traitée S, seul le produit présent au niveau de la fente 7 venant en contact avec la surface traitée S. Cela permet de déposer le produit sans risque de voir l'élément d'application enlever, à son passage, du produit préalablement déposé sur celle-ci, et sans former de traces.

Mais le produit P peut aussi être déposé avec un contact de l'élément d'application avec la surface à traiter.

Lorsque les parois 4 sont élastiquement déformables, la fente 7 peut se déformer pour épouser la forme de la surface traitée.

Ainsi, lorsque du produit doit être appliqué sur un ongle, la fente 7 peut se déformer pour épouser la forme bombée de l'ongle et permettre une application homogène sur l'ongle.

Les parois 4 peuvent définir en section transversale des formes autres qu'un V.

Ainsi, comme illustré sur les figures 4 à 7, les parois 4 peuvent définir en section transversale une forme en U, comportant par exemple des portions supérieures 4a planes et parallèles entre elles, prolongées inférieurement par des portions inférieures 4b convergeant l'une vers l'autre.

On voit sur la figure 4 que la fente 7 peut être formée entre deux nervures longitudinales parallèles 12 se raccordant aux portions inférieures 4b du U, ces nervures 12 étant saillantes dans l'exemple considéré.

Les portions inférieures 4b peuvent être plus ou moins inclinées par rapport aux portions supérieures 4a.

Ainsi, dans l'exemple de la figure 5, les portions inférieures 4b sont davantage inclinées vers le bas que dans l'exemple de la figure 6.

Dans l'exemple illustré sur la figure 7, les parois 4 ne sont pas symétriques l'une de l'autre par rapport à un plan. Une première paroi est par exemple plane et l'autre paroi comporte une portion supérieure 4a parallèle à la première paroi 4, prolongée par une portion inférieure 4b convergeant vers la première paroi.

Les portions inférieures 4b peuvent ne pas être entièrement dirigées vers le bas et, comme illustré sur la figure 8, les portions inférieures 4b peuvent être rentrantes, étant recourbées en direction de l'ouverture 10, de sorte qu'en section transversale, les parois 4 définissent sensiblement une forme en W. On voit sur la figure 8 que la fente 7 peut ainsi se situer légèrement en retrait de l'extrémité inférieure de l'élément d'application 2.

Les parois 4 peuvent également définir en section transversale une forme en C, la fente 7 étant située dans le fond de la concavité du C, comme illustré sur la figure 9.

Dans les exemples qui viennent d'être décrits, la fente 7 est unique.

En variante, comme illustré sur les figures 10 à 12, l'élément d'application 2 peut comporter plusieurs fentes, notamment deux fentes 7 parallèles.

Dans l'exemple de la figure 10, les parois 4 sont sensiblement parallèles et deux fentes 7 sont définies de part et d'autre d'une paroi intermédiaire 18, de section transversale en V retourné.

Dans la variante illustrée à la figure 11, les parois 4 ne sont pas parallèles mais convergent l'une vers l'autre en direction de deux fentes 7. Ces dernières peuvent être séparées par une paroi intermédiaire ayant une forme autre qu'un V retourné.

On a représenté sur la figure 12 un élément d'application comportant deux fentes 7 disposées de part et d'autre d'une paroi intermédiaire 19 ayant en section transversale une forme d'arc de cercle, concave vers l'intérieur du V.

Dans les exemples qui viennent d'être décrits, la ou les fentes 7 s'étendent suivant un axe Y sensiblement rectiligne et parallèle à l'axe X.

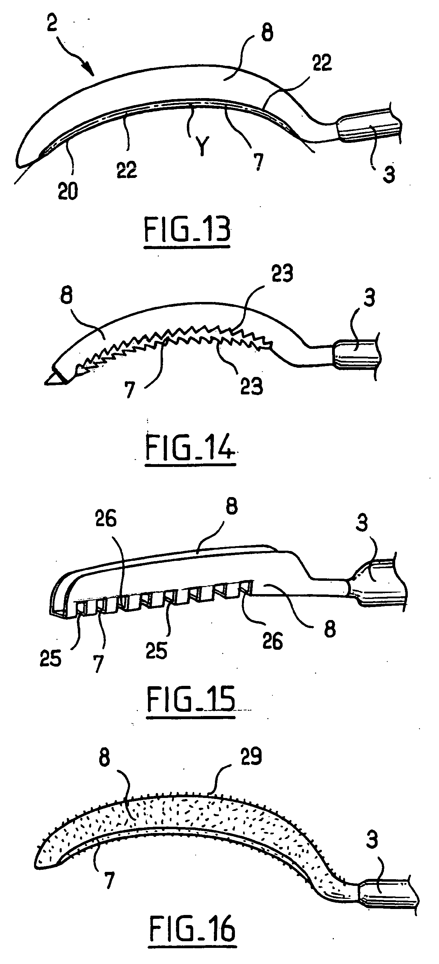

On a représenté sur la figure 13 un élément d'application 2 qui vise à assurer une application satisfaisante sur une surface bombée telle qu'un ongle.

Cet élément d'application 2 peut comporter deux parois 8 de forme incurvée de manière à définir une fente 7 concave vers l'extérieur, s'étendant suivant un axe courbe Y ayant par exemple une forme en portion de cercle ou en arc d'ellipse, épousant la forme bombée des ongles.

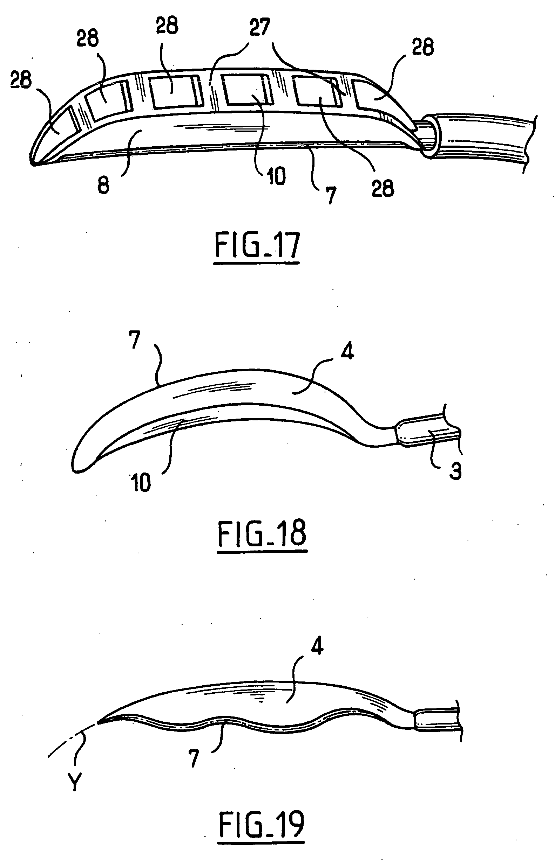

En variante, comme illustré sur la figure 18, la fente 7 peut être convexe vers l'extérieur et l'ouverture 10 être dans une concavité de l'élément d'application. Cette forme de la fente 7 est notamment adaptée à l'application sur les cils.

En variante encore, la fente 7 peut décrire une courbe ondulée, comme illustré sur la figure 19.

La fente 7 peut être formée entre deux bords parallèles linéiformes 22 comme illustré notamment sur les figures 1 et 13 ou, en variante, entre deux rangées de dents 23 comme illustré sur la figure 14.

L'élément d'application peut être réalisé avec des dents 23 notamment lorsqu'il est destiné à l'application d'un produit sur des fibres kératiniques, en particulier les cils ou les sourcils.

Les dents 23 d'une rangée peuvent s'étendre en regard des dents 23 de l'autre rangée ou, en variante, être disposées en quinconce, afin, le cas échéant, d'agripper davantage les cils.

Dans les exemples qui viennent d'être décrits, la fente 7 est ininterrompue.

En variante, la fente 7 peut être interrompue par au moins un pont de matière 25 reliant les deux parois 8 ailleurs qu'aux extrémités de la fente 7, comme illustré sur la figure 15. La fente 21 est ainsi constituée dans l'exemple de cette figure par une succession d'orifices 26 séparés par des ponts de matière 25.

L'élément d'application 2 peut être recouvert par un revêtement de flocage 29, le cas échéant, comme illustré sur la figure 16, afin de retenir davantage de produit et/ou de permettre d'appliquer ou d'étaler du produit avec les faces extérieures des parois 8.

Dans les exemples qui précèdent, l'ouverture 10 formée entre les parois 8 est ininterrompue entre ses extrémités axiales.

En variante, comme illustré sur la figure 17, l'ouverture peut être interrompue par des ponts de matière 27 reliant les deux parois 4, l'ouverture 10 étant alors constituée par une succession d'orifices 28.

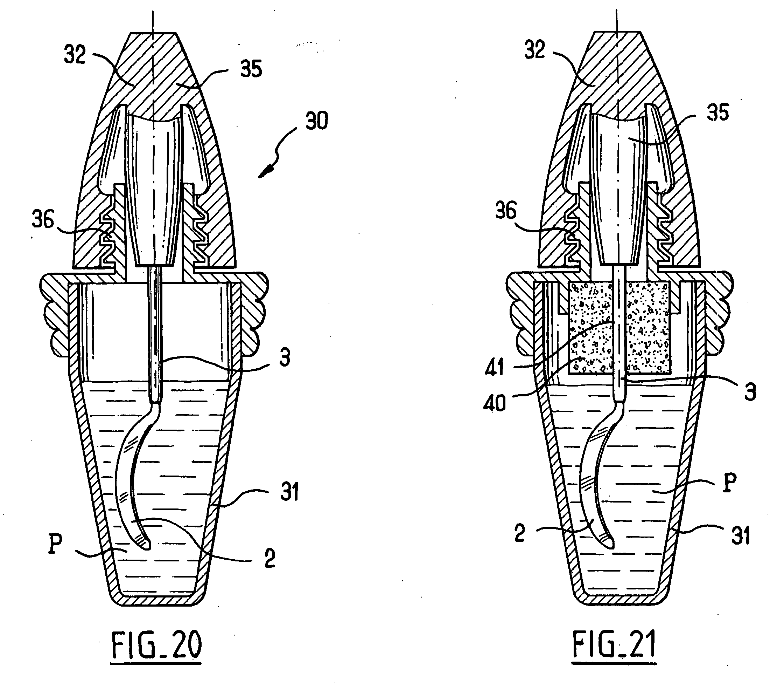

On a représenté sur la figure 20 un dispositif 30 conforme à l'invention, comportant un récipient 31 contenant un produit P et un applicateur 32. Celui-ci comporte un élément d'application 2 tel que par exemple celui décrit à la figure 13 et un organe de préhension 35 qui constitue également un capuchon de fermeture du récipient 31.

L'élément d'application 2 est relié au capuchon 35 par la tige 3.

Le récipient 31 comporte en partie supérieure un col fileté 36 sur lequel peut se visser le capuchon de fermeture 35.

L'élément d'application 2 peut être chargé en produit en l'introduisant dans le récipient 31.

Le dispositif 30 est dépourvu d'essoreur.

En variante, comme illustré sur la figure 21, le récipient 31 peut loger un bloc de mousse 40, par exemple de polyuréthane à cellules ouvertes, servant d'essoreur, comportant au moins une fente 41 sensiblement fermée au repos, en l'absence d'applicateur.

Les parois 8 de l'élément d'application 2 permettent de protéger la réserve de produit contenue dans la cavité 6 lors du passage de l'élément d'application à travers l'essoreur.

Le récipient peut être muni d'un essoreur autre qu'un bloc de mousse.

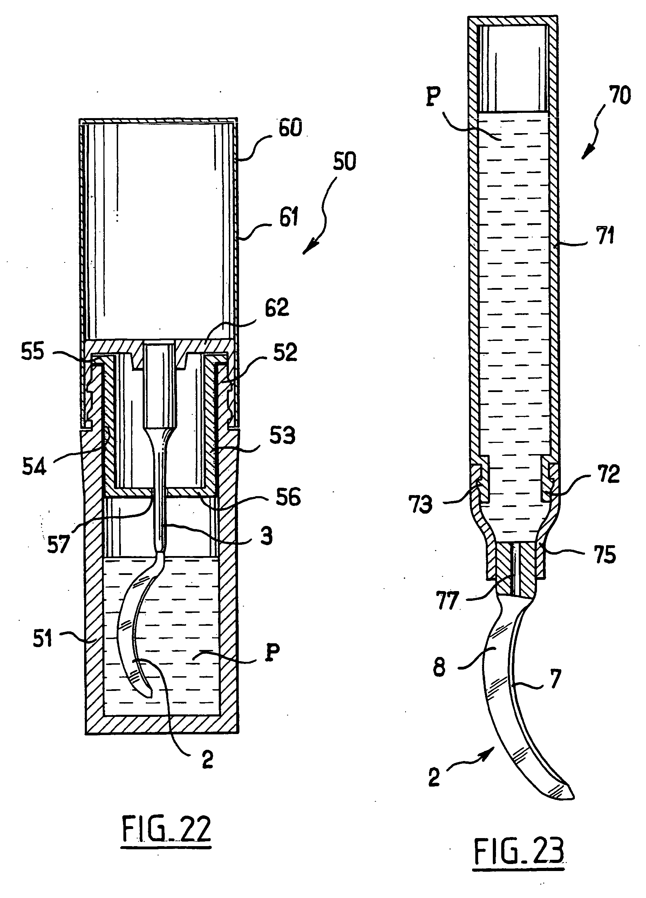

On a représenté, à titre d'exemple, sur la figure 22 un dispositif 50 comportant un récipient 51 contenant un produit P à appliquer.

Le récipient 51 comporte un col 52, fileté extérieurement, qui est muni d'un essoreur 53, par exemple en élastomère.

L'essoreur 53 peut comporter une paroi 54, sensiblement cylindrique de révolution, se raccordant à son extrémité supérieure à un rebord 55 venant en appui contre la tranche supérieure du col 52, et à son extrémité inférieure à une paroi transversale 56 percée d'un orifice central 57, de diamètre légèrement supérieur à celui de la tige 3.

Le récipient 51 peut être fermé par un capuchon de fermeture 60 comportant un capot 61 dans lequel est fixé un insert 62 recevant la tige 3.

On ne sort pas du cadre de la présente invention lorsque l'élément d'application est solidaire du récipient lors de l'application.

A titre d'illustration, on a représenté sur la figure 23 un dispositif 70 comportant un récipient 71 sur lequel est fixé un élément d'application 2.

La fixation de l'élément d'application 2 sur le récipient peut s'effectuer de multiples façons et notamment par encliquetage. Ce récipient 71 peut par exemple comporter, à une extrémité, un col 72 pourvu d'un bourrelet annulaire 73 permettant le montage d'un embout 75 portant l'élément d'application 2.

L'élément d'application 2 comporte un canal 77 débouchant à une extrémité à l'intérieur du récipient 71 et à l'autre extrémité dans sa cavité 6.

On ne sort pas du cadre de la présente invention lorsque la fente 7 de l'élément d'application s'étend non parallèlement à la direction longitudinale de la tige.

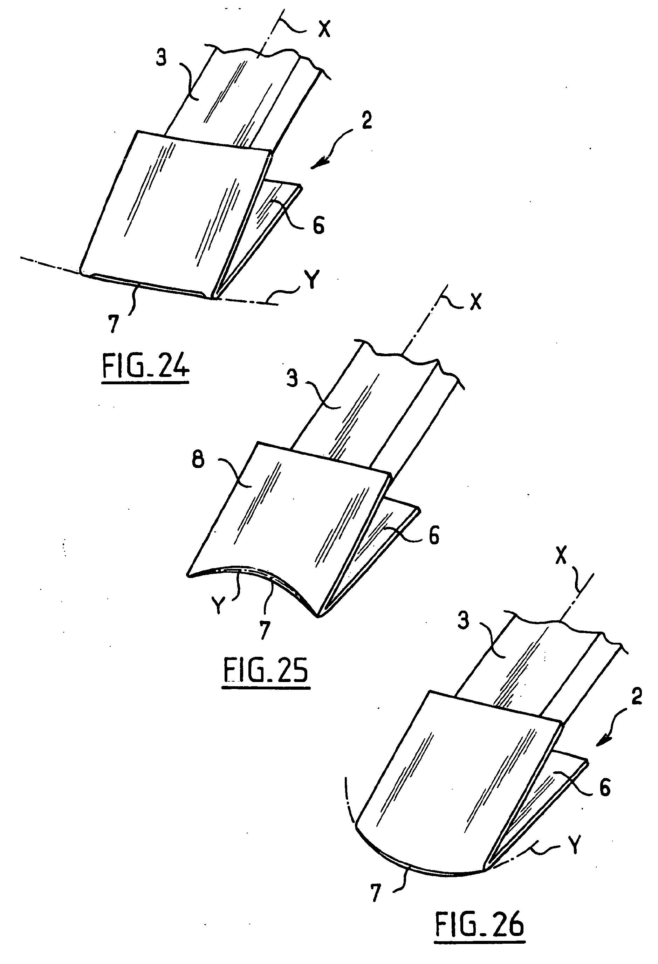

On a représenté sur la figure 24 un élément d'application 2 dans lequel l'axe Y de la fente 7 est perpendiculaire à l'axe X de la tige 3.

Dans l'exemple de la figure 24, la fente 7 présente une forme sensiblement rectiligne.

En variante, comme illustré sur la figure 25, l'élément d'application 2 peut comporter une fente 7 ayant une forme concave dirigée vers l'extérieur, de manière à pouvoir épouser une surface bombée, par exemple celle d'un ongle, lors de l'application.

En variante encore, comme illustré sur la figure 26, la fente 7 peut avoir une forme convexe dirigée vers l'extérieur.

Bien entendu, l'invention n'est pas limitée aux exemples de mise en oeuvre qui viennent d'être décrits, et les caractéristiques des divers modes de réalisation peuvent être combinées entre elles. On peut par exemple munir les bords des fentes des éléments d'application des figures 24 ou 25 de dents ou d'un revêtement de flocage.

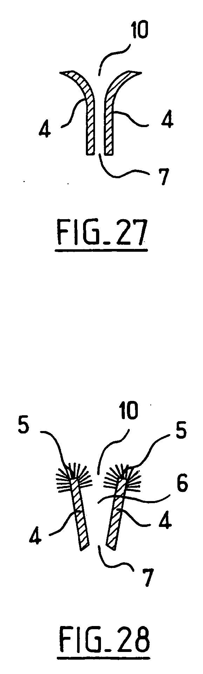

Lorsque l'élément d'application présente une section transversale en V, chaque paroi 4 peut présenter, en section transversale, une concavité dirigée vers l'extérieur, comme illustré sur la figure 27. Ainsi la partie inférieure d'une paroi 4 peut être sensiblement parallèle à la partie inférieure de l'autre paroi 4, et les parties supérieures des parois 4 peuvent diverger vers l'extérieur.

L'élément d'application peut encore être partiellement floqué, par exemple être floqué au niveau des bords supérieurs 5 seulement, comme illustré sur la figure 28. Ainsi du produit contenu dans la cavité 6 peut être distribué, au choix, par la fente 7 ou du côté de l'ouverture 10.

Dans toute la description, y compris les revendications, l'expression « comportant un » doit être comprise comme étant synonyme de « comportant au moins un », sauf si le contraire est spécifié.

## Revendications

1. Applicateur configuré pour appliquer un produit sur une partie du corps humain, comportant un élément d'application (2), **caractérisé par le fait que** ledit élément d'application comporte :
- au moins deux parois (8) formant entre elles une cavité (6) apte à retenir du produit,
- au moins une fente (7) s'étendant selon un axe longitudinal (Y) et par laquelle du produit contenu dans ladite cavité peut être distribué pour être appliqué,
- au moins une ouverture (10) par laquelle la cavité débouche à l'extérieur, cette ouverture présentant au moins une portion ayant, dans un plan transversal à la fente, une largeur (l₂) supérieure à celle (l₁) de la fente dans ce même plan.

2. Applicateur selon la revendication précédente, **caractérisé par le fait que** la fente (7) est située entre les deux parois (8).

3. Applicateur selon l'une des deux revendications précédentes, **caractérisé par le fait que** les parois (8) présentent une forme allongée avec un axe longitudinal sensiblement parallèle à celui (Y) de la fente.

4. Applicateur selon l'une quelconque des revendications précédentes, **caractérisé par le fait que** la fente (7) est entièrement séparée de l'ouverture (10).

5. Applicateur selon l'une quelconque des revendications précédentes, **caractérisé par le fait que** la fente (7) est située sensiblement à l'opposé de l'ouverture (10).

6. Applicateur selon l'une quelconque des revendications précédentes, **caractérisé par le fait que** l'élément d'application présente, en section transversale, une forme sensiblement en V, C, U ou W, au moins une fente (7) débouchant dans le fond d'une concavité du V, C, U ou W, respectivement.

7. Applicateur selon la revendication précédente, les parois (8) définissant en section transversale une forme en U, **caractérisé par le fait que** la fente (7) est formée entre deux nervures (12) sensiblement parallèles se raccordant à la base du U.

8. Applicateur selon l'une quelconque des revendications 1 à 5, **caractérisé par le fait que** l'élément d'application comporte au moins deux fentes (7) sensiblement parallèles.

9. Applicateur selon la revendication précédente, les deux parois (8) définissant en section transversale une forme en W, **caractérisé par le fait que** les deux fentes (7) débouchent dans le fond des deux concavités du W.

10. Applicateur selon la revendication 8, les deux parois (8) définissant en section transversale une forme en V, **caractérisé par le fait que** les deux fentes débouchent de part et d'autre du fond (19) de la concavité du V.

11. Applicateur selon la revendication 6, **caractérisé par le fait que** l'élément d'application présente une section en V, chaque branche du V présentant une concavité dirigée vers l'extérieur.

12. Applicateur selon l'une quelconque des revendications précédentes, **caractérisé par le fait que** la fente (7) s'étend suivant une direction sensiblement rectiligne.

13. Applicateur selon l'une quelconque des revendications 1 à 11, **caractérisé par le fait que** la fente (7) s'étend suivant une courbe, notamment une courbe concave ou convexe.

14. Applicateur selon la revendication précédente, **caractérisé par le fait que** la courbe est sensiblement une portion de cercle ou d'ellipse.

15. Applicateur selon la revendication 13, **caractérisé par le fait que** la fente (7) s'étend suivant une courbe ondulée.

16. Applicateur selon l'une quelconque des revendications précédentes, **caractérisé par le fait que** la fente (7) présente des bords linéiformes.

17. Applicateur selon l'une quelconque des revendications 1 à 15, **caractérisé par le fait que** la fente (7) présente des bords dentelés.

18. Applicateur selon la revendication précédente, **caractérisé par le fait que** les bords de la fente (7) comportent deux rangées de dents (23).

19. Applicateur selon la revendication précédente, **caractérisé par le fait que** les dents (23) respectives desdites rangées sont en regard les unes des autres.

20. Applicateur selon la revendication 18, **caractérisé par le fait que** les dents (23) respectives desdites rangées sont disposées en quinconce.

21. Applicateur selon l'une quelconque des revendications précédentes, **caractérisé par le fait que** la fente est ininterrompue sur toute sa longueur.

22. Applicateur selon l'une quelconque des revendications 1 à 20, **caractérisé par le fait que** la fente est interrompue par la présence d'au moins un pont de matière (25) reliant les deux parois (8).

23. Applicateur selon l'une quelconque des revendications précédentes, **caractérisé par le fait que** ladite ouverture (10) est ininterrompue.

24. Applicateur selon l'une quelconque des revendications 1 à 22, **caractérisé par le fait que** ladite ouverture est interrompue par la présence d'au moins un pont de matière (27) reliant les deux parois (8).

25. Applicateur selon l'une quelconque des revendications précédentes, comportant une tige (3), **caractérisé par le fait que** la fente (7) s'étend sensiblement parallèlement à la direction longitudinale (X) de la tige.

26. Applicateur selon l'une quelconque des revendications 1 à 24, comportant une tige (3), **caractérisé par le fait que** la fente (7) s'étend sensiblement perpendiculairement à la direction longitudinale (X) de la tige.

27. Applicateur selon l'une quelconque des revendications précédentes, **caractérisé par le fait que** l'élément d'application (2) est au moins partiellement floqué.

28. Applicateur selon la revendication précédente, **caractérisé par le fait que** l'ouverture (10) comporte au moins un bord (5) au moins partiellement floqué, notamment deux bords sensiblement parallèles floqués.

29. Applicateur selon l'une quelconque des revendications précédentes, **caractérisé par le fait que** les parois (8) sont élastiquement déformables.

30. Applicateur selon l'une quelconque des revendications 1 à 28, **caractérisé par le fait que** les parois (8) sont réalisées dans un matériau rigide.

31. Applicateur selon l'une quelconque des revendications précédentes, **caractérisé par le fait que** l'élément d'application est réalisé dans au moins l'un des matériaux suivants : matière thermoplastique ou thermodurcissable, élastomère, verre, bois ou métal.

32. Applicateur selon l'une quelconque des revendications précédentes, **caractérisé par le fait qu'**il comporte un organe de préhension (35).

33. Dispositif de conditionnement et d'application d'un produit notamment cosmétique et/ou de soin, comportant :
- un récipient contenant un produit destiné à être appliqué,
- un applicateur selon l'une quelconque des revendications précédentes.

34. Dispositif selon la revendication précédente, **caractérisé par le fait que** l'applicateur est fixé de manière amovible sur le récipient.

35. Dispositif selon la revendication précédente, **caractérisé par le fait que** l'applicateur est agencé pour pouvoir fermer le récipient de manière étanche.

36. Dispositif selon l'une des deux revendications précédentes, **caractérisé par le fait qu'**il comporte un essoreur.

37. Dispositif selon la revendication précédente, **caractérisé par le fait que** l'essoreur comporte un bloc de mousse.

38. Dispositif selon la revendication 33, **caractérisé par le fait que** l'applicateur est fixé à demeure sur le récipient et comporte un canal intérieur (77) permettant au produit contenu dans le récipient de s'écouler dans la cavité (6) de l'élément d'application (2).

39. Utilisation d'un applicateur tel que défini dans l'une quelconque des revendications 1 à 31 pour appliquer du produit sur le corps ou le visage, notamment les ongles, les cils ou sourcils, la peau, les lèvres.

40. Procédé de traitement cosmétique comportant les étapes suivantes :
- fournir un applicateur comportant :
- au moins deux parois formant entre elles une cavité apte à retenir du produit cosmétique,
- au moins une fente s'étendant selon un axe longitudinal et par laquelle du produit contenu dans la cavité peut être distribué pour être appliqué,
- au moins une ouverture autre que la fente par laquelle la cavité débouche à l'extérieur, cette cavité ayant, dans un plan transversal à la fente, une largeur supérieure à celle de la fente dans ce même plan,
- charger la cavité en produit cosmétique,
- appliquer le produit cosmétique sur une partie du corps humain soit par la fente, soit par l'ouverture.

41. Procédé selon la revendication précédente, **caractérisé par le fait que** l'ouverture comporte au moins un bord au moins partiellement floqué, notamment deux bords opposés floqués.

## Claims

1. An applicator configured to apply a substance on a portion of the human body, the applicator comprising an applicator element (2) and said applicator element comprising:
· at least two walls (8) forming between them a cavity (6) suitable for retaining the substance;
· at least one slot (7) extending along a longitudinal axis (Y) and through which the substance contained in said cavity can be dispensed in order to be applied; and
· at least one opening (10) whereby the cavity opens to the outside, said opening possessing at least one portion of width (12) in a plane extending transversely to the slot that is greater than the width (11) of the slot in the same plane.

2. An applicator according to claim 1, **characterized by** the fact that the slot (7) is situated between the two walls (8).

3. An applicator according to any preceding claim, **characterized by** the fact that the walls (8) present an elongate shape with a longitudinal axis that is substantially parallel to the axis (Y) of the slot.

4. An applicator according to any preceding claim, **characterized by** the fact that the slot (7) is entirely separate from the opening (10).

5. An applicator according to any preceding claim, **characterized by** the fact that the slot (7) is situated substantially opposite from the opening (10).

6. An applicator according to any preceding claim, **characterized by** the fact that the cross-section of the applicator element presents a shape that is substantially V-shaped, C-shaped, U-shaped, or W-shaped, at least one slot (7) opening out in the bottom of a concave portion of the V-, C-, U-, or W-shape respectively.

7. An applicator according to claim 6, the walls (8) defining a U-shaped cross-section, **characterized by** the fact that the slot (7) is formed between two substantially parallel rims (12) connected to the bottom of the U-shape.

8. An applicator according to any one of claims 1 to 5, **characterized by** the fact that the applicator element presents at least two substantially parallel slots (7).

9. An applicator according to claim 8, the two walls (8) defining a W-shaped cross-section, **characterized by** the fact that the two slots (7) open out in the bottoms of the two concave portions of the W-shape.

10. An applicator according to claim 8, the two walls (8) defining a V-shaped cross-section, **characterized by** the fact that the two slots open out on either side of the bottom (19) of the concave portion of the V-shape.

11. An applicator according to claim 6, **characterized by** the fact that the applicator element presents a V-shaped section, with each limb of the V-shape presenting an outwardly-directed concave face.

12. An applicator according to any preceding claim, **characterized by** the fact that the slot (7) extends in a substantially rectilinear direction.

13. An applicator according to any one of claims 1 to 11, **characterized by** the fact that the slot (7) extends along a curve, in particular a curve that is concave or convex.

14. An applicator according to claim 13, **characterized by** the fact that the curve is substantially a portion of a circle or of an ellipse.

15. An applicator according to claim 13, **characterized by** the fact that the slot (7) extends along an undulating curve.

16. An applicator according to any preceding claim, **characterized by** the fact that the slot (7) presents edges of substantially linear shape.

17. An applicator according to any one of claims 1 to 15, **characterized by** the fact that the slot (7) presents serrated edges.

18. An applicator according to claim 17, **characterized by** the fact that the edges of the slot (7) comprise two rows of teeth (23).

19. An applicator according to claim 18, **characterized by** the fact that the respective teeth (23) of said rows are in register with one another.

20. An applicator according to claim 18, **characterized by** the fact that the respective teeth (23) of said rows are disposed in a staggered configuration.

21. An applicator according to any preceding claim, **characterized by** the fact that the slot is not interrupted along its entire length.

22. An applicator according to any one of claims 1 to 20, **characterized by** the fact that the slot is interrupted by the presence of at least one bridge of material (25) interconnecting the two walls (8).

23. An applicator according to any preceding claim, **characterized by** the fact that said opening (10) is not interrupted.

24. An applicator according to any one of claims 1 to 22, **characterized by** the fact that said opening is interrupted by the presence of at least one bridge of material (27) interconnecting the two walls (8).

25. An applicator according to any preceding claim, including a stem (3), **characterized by** the fact that the slot (7) extends substantially parallel to the longitudinal direction (X) of the stem.

26. An applicator according to any one of claims 1 to 24, including a stem (3), **characterized by** the fact that the slot (7) extends substantially perpendicularly to the longitudinal direction (X) of the stem.

27. An applicator according to any preceding claim, **characterized by** the fact that the applicator element (2) is flocked, at least in part.

28. An applicator according to claim 27, **characterized by** the fact that the opening (10) presents at least one edge (5) that is flocked at least in part, and in particular presents two substantially-parallel edges that are flocked.

29. An applicator according to any preceding claim, **characterized by** the fact that the walls (8) are elastically deformable.

30. An applicator according to any one of claims 1 to 28, **characterized by** the fact that the walls (8) are made of a rigid material.

31. An applicator according to any preceding claim, **characterized by** the fact that the applicator element is made out of at least one of the following materials: a thermoplastic or thermosetting material; elastomer; glass; wood; or metal.

32. An applicator according to any preceding claim, **characterized by** the fact that it includes a handle member (35).

33. A packaging and applicator device for a substance, in particular a cosmetic and/or a care product, the device comprising:
· a receptacle containing a substance for application; and
· an applicator according to any preceding claim.

34. A device according to claim 33, **characterized by** the fact that the applicator is releasably secured to the receptacle.

35. A device according to claim 34, **characterized by** the fact that the applicator is arranged to be capable of closing the receptacle in leaktight manner.

36. A device according to any one of the two preceding claims, **characterized by** the fact that it includes a wiper.

37. A device according to claim 36, **characterized by** the fact that the wiper comprises a block of foam.

38. A device according to claim 33, **characterized by** the fact that the applicator is permanently fixed to the receptacle and includes an internal channel (77) enabling the substance contained in the receptacle to flow into the cavity (6) of the applicator element (2).

39. Use of an applicator as defined in any one of claims 1 to 31 for applying a substance to the body or the face, in particular the nails, the eyelashes or eyebrows, the skin and the lips.

40. A cosmetic treatment method comprising the following steps:
· providing an applicator comprising:
· at least two walls forming between them a cavity suitable for retaining a cosmetic substance;
· at least one slot extending along a longitudinal axis and through which the substance contained in said cavity can be dispensed in order to be applied; and
· at least one opening whereby the cavity opens to the outside, said opening possessing at least one portion of width in a plane extending transversely to the slot that is greater than the width of the slot in the same plane;
· loading the cavity with cosmetic substance; and
· applying the cosmetic substance to a portion of the human body either via the slot or via the opening.

41. A method according to the preceding claim, **characterized by** the fact that the opening includes at least one edge that is flocked at least in part, and in particular two opposite edges that are flocked.

## Patentansprüche

1. Auftrageinrichtung, die ausgebildet ist, um ein Produkt auf einen Teil des menschlichen Körpers aufzutragen, umfassend ein Auftragelement (2), **dadurch gekennzeichnet, dass** das Aufragelement umfasst:
- mindestens zwei Wände (8), die miteinander einen Hohlraum (6) bilden, der geeignet ist, Produkt zurückzuhalten,
- mindestens einen Schlitz (7), der sich gemäß einer Längsachse (Y) erstreckt und über den im Hohlraum enthaltenes Produkt abgegeben werden kann, um aufgetragen zu werden,
- mindestens eine Öffnung (10), über die der Hohlraum nach außen ausmündet, wobei diese Öffnung mindestens einen Abschnitt aufweist, der in einer Ebene quer zum Schlitz eine Breite (l₂) besitzt, die größer als diejenige (l₁) des Schlitzes in dieser Ebene ist.

2. Auftrageinrichtung nach dem vorhergehenden Ansprüche, **dadurch gekennzeichnet, dass** der Schlitz (7) zwischen den beiden Wänden (8) gelegen ist.

3. Auftrageinrichtung nach einem der beiden vorhergehenden Ansprüche, **dadurch gekennzeichnet, dass** die Wände (8) eine langgestreckte Form mit einer Längsachse aufweisen, die im Wesentlichen parallel zu derjenigen (Y) des Schlitzes ist.

4. Auftrageinrichtung nach einem der vorhergehenden Ansprüche, **dadurch gekennzeichnet, dass** der Schlitz (7) von der Öffnung (10) ganz getrennt ist.

5. Auftrageinrichtung nach einem der vorhergehenden Ansprüche, **dadurch gekennzeichnet, dass** der Schlitz (7) im Wesentlichen auf der der Öffnung (10) entgegengesetzten Seite gelegen ist.

6. Auftrageinrichtung nach einem der vorhergehenden Ansprüche, **dadurch gekennzeichnet, dass** das Auftragelement im Querschnitt im Wesentlichen eine V-, C-, U- oder W-Form besitzt, wobei mindestens ein Schlitz (7) im Boden eines Hohlraums des V, C, U bzw. W ausmündet.

7. Auftrageinrichtung nach dem vorhergehenden Anspruch, wobei die Wände (8) im Querschnitt eine U-Form bilden, **dadurch gekennzeichnet, dass** der Schlitz (7) zwischen zwei im Wesentlichen parallelen Rippen (12) gebildet ist, die an die Basis des U anschließen.

8. Auftrageinrichtung nach einem der Ansprüche 1 bis 5, **dadurch gekennzeichnet, dass** das Auftragelement mindestens zwei im Wesentlichen parallele Schlitze (7) umfasst.

9. Auftrageinrichtung nach dem vorhergehenden Anspruch, wobei die beiden Wände (8) im Querschnitt eine W-Form bilden, **dadurch gekennzeichnet, dass** die beiden Schlitze (7) im Boden der beiden Hohlräume des W ausmünden.

10. Auftrageinrichtung nach Anspruch 8, wobei die beiden Wände (8) im Querschnitt eine V-Form bilden, **dadurch gekennzeichnet, dass** die beiden Schlitze zu beiden Seiten des Bodens (19) des Hohlraums des V ausmünden.

11. Auftrageinrichtung nach Anspruch 6, **dadurch gekennzeichnet, dass** das Auftragelement einen V-Querschnitt aufweist, wobei jeder Schenkel des V eine nach außen gerichtete Konkavität besitzt.

12. Auftrageinrichtung nach einem der vorhergehenden Ansprüche, **dadurch gekennzeichnet, dass** der Schlitz (7) sich in einer im Wesentlichen geradlinigen Richtung erstreckt.

13. Auftrageinrichtung nach einem der Ansprüche 1 bis 11, **dadurch gekennzeichnet, dass** der Schlitz (7) sich gemäß einer Kurve, insbesondere einer konkaven oder konvexen Kurve erstreckt.

14. Auftrageinrichtung nach dem vorhergehenden Anspruch, **dadurch gekennzeichnet, dass** die Kurve im Wesentlichen ein Kreis- oder Ellipsenabschnitt ist.

15. Auftrageinrichtung nach Anspruch 13, **dadurch gekennzeichnet, dass** der Schlitz (7) sich gemäß einer gewellten Kurve erstreckt.

16. Auftrageinrichtung nach einem der vorhergehenden Ansprüche, **dadurch gekennzeichnet, dass** der Schlitz (7) linienförmige Ränder aufweist.

17. Auftrageinrichtung nach einem der Ansprüche 1 bis 15, **dadurch gekennzeichnet, dass** der Schlitz (7) gezahnte Ränder aufweist.

18. Auftrageinrichtung nach dem vorhergehenden Anspruch, **dadurch gekennzeichnet, dass** die Ränder des Schlitzes (7) zwei Reihen von Zähnen (23) umfassen.

19. Auftrageinrichtung nach dem vorhergehenden Anspruch, **dadurch gekennzeichnet, dass** die jeweiligen Zähne (23) der Reihen einander gegenüberstehen.

20. Auftrageinrichtung nach Anspruch 18, **dadurch gekennzeichnet, dass** die jeweiligen Zähne der Reihe versetzt angeordnet sind.

21. Auftrageinrichtung nach einem der vorhergehenden Ansprüche, **dadurch gekennzeichnet, dass** der Schlitz auf seiner ganzen Länge ununterbrochen ist.

22. Auftrageinrichtung nach einem der Ansprüche 1 bis 20, **dadurch gekennzeichnet, dass** der Schlitz durch das Vorhandensein mindestens einer die beiden Wände (8) verbindenden Materialbrücke (25) unterbrochen ist.

23. Auftrageinrichtung nach einem der vorhergehenden Ansprüche, **dadurch gekennzeichnet, dass** die Öffnung (10) ununterbrochen ist.

24. Auftrageinrichtung nach einem der Ansprüche 1 bis 22, **dadurch gekennzeichnet, dass** die Öffnung durch das Vorhandensein mindestens einer die beiden Wände (8) verbindenden Materialbrücke (27) unterbrochen ist.

25. Auftrageinrichtung nach einem der vorhergehenden Ansprüche, umfassend eine Stange (3), **dadurch gekennzeichnet, dass** der Schlitz (7) sich im Wesentlichen parallel zur Längsrichtung (X) der Stange erstreckt.

26. Auftrageinrichtung nach einem der Ansprüche 1 bis 24, umfassend eine Stange (3), **dadurch gekennzeichnet, dass** der Schlitz (7) sich im Wesentlichen senkrecht zur Längsrichtung (X) der Stange erstreckt.

27. Auftrageinrichtung nach einem der vorhergehenden Ansprüche, **dadurch gekennzeichnet, dass** das Auftragelement (2) mindestens partiell beflockt ist.

28. Auftrageinrichtung nach dem vorhergehenden Anspruch, **dadurch gekennzeichnet, dass** die Öffnung (10) mindestens einen mindestens teilweise beflockten Rand (5), insbesondere zwei im Wesentlichen parallele beflockte Ränder umfasst.

29. Auftrageinrichtung nach einem der vorhergehenden Ansprüche, **dadurch gekennzeichnet, dass** die Wände (8) elastisch verformbar sind.

30. Auftrageinrichtung nach einem der Ansprüche 1 bis 28, **dadurch gekennzeichnet, dass** die Wände (8) aus einem starren Werkstoff hergestellt sind.

31. Auftrageinrichtung nach einem der vorhergehenden Ansprüche, **dadurch gekennzeichnet, dass** das Auftragelement aus mindestens einem der folgenden Werkstoffe hergestellt ist: thermoplastisches oder warmhärtendes Material, Elastomer, Glas, Holz oder Metall.

32. Auftrageinrichtung nach einem der vorhergehenden Ansprüche, **dadurch gekennzeichnet, dass** sie ein Greiforgan (35) umfasst.

33. Vorrichtung zum Verpacken und Auftragen eines insbesondere kosmetischen und/oder Pflegeprodukts, umfassend:
- einen Behälter, der ein Produkt enthält, das dazu bestimmt ist, aufgetragen zu werden,
- eine Auftrageinrichtung nach einem der vorhergehenden Ansprüche.

34. Vorrichtung nach dem vorhergehenden Anspruch, **dadurch gekennzeichnet, dass** die Auftrageinrichtung an dem Behälter abnehmbar befestigt ist.

35. Vorrichtung nach dem vorhergehenden Anspruch, **dadurch gekennzeichnet, dass** die Auftrageinrichtung ausgebildet ist, um den Behälter dicht verschließen zu können.

36. Vorrichtung nach einem der beiden vorhergehenden Ansprüche, **dadurch gekennzeichnet, dass** sie ein Abstreiforgan umfasst.

37. Vorrichtung nach dem vorhergehenden Anspruch, **dadurch gekennzeichnet, dass** das Abstreiforgan einen Schaumblock umfasst.

38. Vorrichtung nach Anspruch 33, **dadurch gekennzeichnet, dass** die Auftrageinrichtung an dem Behälter bleibend befestigt ist und einen inneren Kanal (77) umfasst, der dem im Behälter enthaltenen Produkt gestattet, in den Hohlraum (6) des Auftragelements (2) zu fließen.

39. Verwendung einer Auftrageinrichtung, wie sie in einem der Ansprüche 1 bis 31 definiert ist, um Produkt auf den Körper oder das Gesicht, insbesondere die Nägel, die Wimpern oder Augenbrauen, die Haut, die Lippen, aufzutragen.

40. Verfahren zur kosmetischen Behandlung, umfassend die folgenden Schritte:
- eine Auftrageinrichtung liefern, umfassend:
- mindestens zwei Wände, die miteinander einen Hohlraum bilden, der kosmetisches Produkt zurückhalten kann,
- mindestens einen Schlitz, der sich gemäß einer Längsachse erstreckt und über den in dem Hohlraum enthaltenes Produkt abgegeben werden kann, um aufgetragen zu werden,
- mindestens eine andere Öffnung als den Schlitz, über die der Hohlraum nach außen ausmündet, wobei dieser Hohlraum in einer Ebene quer zum Schlitz eine Breite besitzt, die größer als diejenige des Schlitzes in derselben Ebene ist,
- den Hohlraum mit kosmetischen Produkt laden,
- das kosmetische Produkt auf einen Teil des menschlichen Körpers entweder über den Schlitz oder über die Öffnung auftragen.

41. Verfahren nach dem vorhergehenden Anspruch, **dadurch gekennzeichnet, dass** die Öffnung mindestens einen mindestens teilweise beflockten Rand, insbesondere zwei einander entgegengesetzte beflockte Ränder, umfasst.
